# EUROPEAN PATENT APPLICATION

(11) **EP 4 261 761 A1**
(43) Date of publication of application: **18.10.2023**
(21) Application number: 21903221.6
(22) Date of filing: 29.11.2021
(51) Int. Cl.: G06Q 30/06, G06F 16/903, G06F 16/904

(54) **INFORMATION PROCESSING DEVICE, INFORMATION PROCESSING METHOD, AND PROGRAM**

(30) Priority: 07.12.2020 JP 2020202702
(71) Applicant: Japan Tobacco, Inc., Tokyo, 105-6927 (JP)
(72) Inventor: KURISU, Toshiharu, Tokyo 105-6927 (JP); WATANABE, Shin, Tokyo 105-6927 (JP); AKAHOSHI, Keita, Tokyo 150-0012 (JP)
(74) Representative: Bandpay & Greuter
(86) International application number: PCT/JP2021/043678
(87) International publication number: WO 2022/124117

(57) **Abstract**

A first presenting unit 13 presents a user with a group of expressions pertaining to the flavor or aroma of a first food or drink. A second presenting unit 14 presents the user with a second food or drink as a candidate food or drink to be consumed by the user together with the first food or drink that was presented by the first presenting unit 13. The first food or drink is, for example, a drink containing alcohol, and here, is sake. The second food or drink is a food, for example, and here, is a variety of dishes. A third presenting unit 15 presents the user with at least one expression pertaining to the flavor or aroma of the second food or drink presented by the second presenting unit 14 from among the group of expressions presented by the first presenting unit 13, such that the at least one expression can be differentiated from the other expressions.

## Description

### TECHNICAL FIELD

The present invention relates to a technique for presenting to a user an expression related to a taste or a flavor of food/beverage.

### RELATED ART

It is known that when foods or beverages are taken at the same time, they may or may not be compatible with each other; in other words, there are known compatibilities between foods and beverages. For example, in the technique described in Patent Document 1, it is explained that sake (that is, Japanese rice wine) has good compatibility with ayu sashimi, fugu sashimi, seafood salad, foil steamed scallop shell, and raw oysters, and that the reason for this is that the delicious taste of sake has compatibility with a simple and refreshing dish.

### PRIOR ART

### PATENT DOCUMENT

Patent Document 1: JP-A-H8-205850

### SUMMARY

### PROBLEM TO BE SOLVED

However, in many cases, there is not only one person who is perceived as a certain sake taste or aroma, for example. In Patent Document 1, refreshingness is exemplified as the taste of sake, but depending on the brand of sake, there may be an example in which taste such as "fullness," "coolness," "warmth," "freshness," "youthfulness," "sweetness," and "fruitiness" is present in addition to "refreshingness." In other words, in the mechanism of Patent Document 1, only one taste of sake that has suitable compatibility with a dish is presented.

Therefore, the present invention provides a technique of presenting a group of expressions related to the taste or flavor of a certain food/beverage, and informing a user of expressions related to the taste or flavor of another food/beverage that is compatible with the food/beverage from among the group of expressions.

### SOLUTION

According to an aspect of the invention, there is provided an information processing device including: a first presenting unit that presents to a user an expression group related to taste or aroma of a first food/beverage; a second presenting unit that presents to the user a second food/beverage as a candidate of a food/beverage that the user eats and drinks together with the first food/beverage presented by the first presenting unit; a third presenting unit that presents to the user, from an expression group shown by the first presenting unit, one or more expressions related to the taste or flavor of the second food/beverage presented by the second presenting unit, the one or more expressions having an appearance that is distinguishable from other expressions.

The information processing device may further include a fourth presenting unit that presents to the user, in a case that one expression is designated from the expression group presented by the first presenting unit, a third food/beverage having taste or flavor related to the designated expression.

The information processing device may further include a fifth presenting unit that presents to the user a fourth food/beverage having taste or flavor related to an expression according to the user's preference from the expression group presented by the first presenting unit.

The information processing device may further include a specifying unit that specifies the time when the second food/beverage presented by the second presenting unit were ordered by the user, or were provided to the user, wherein after the time specified by the specifying unit, the third presenting unit presents to the user one or more expressions related to the taste or flavor of the second food/beverage, the one or more expressions having an appearance that is distinguishable from other expressions.

In a case that the second presenting unit presents a plurality of the second food/beverage as a candidate of the food/beverage to be eaten and drunk together with the first food/beverage presented by the first presenting unit, the third presenting unit may present, from the expression group presented by the first presenting unit, one or more expressions related to specific taste or the aroma that is common to the plurality of second food/beverage presented by the second presenting unit, the one or more expressions having an appearance that is distinguishable from other expressions.

In a case that the second presenting unit presents a plurality of the second food/beverage as a candidate of the food/beverage to be eaten and drunk together with the first food/beverage presented by the first presenting unit, the third presenting unit may present, from the expression group presented by the first presenting unit, one or more expressions related to each taste or aroma of each of the plurality of second food/beverage presented by the second presenting unit, the one or more expressions having an appearance that is distinguishable from other expressions.

The expression group presented by the first presenting unit may include an image other than a character string.

The first food/beverage may be an alcoholic drink, and the second food/beverage may be a dish.

According to another aspect of the invention, there is provided an information processing method including, a first presenting step of presenting to a user an expression group related to taste or aroma of a first food/beverage; a second presenting step of presenting to the user a second food/beverage as a candidate of food/beverage that the user eats and drinks together with the first food/beverage presented in the first presenting step; a third presenting step of presenting to the user, from the expression group shown at the first presenting step, one or more expressions related to the taste or flavor of the second food/beverage presented at the second presenting step, the one or more expressions having an appearance that is distinguishable from other expressions.

According to yet another aspect of the invention, there is provided a program causing a computer to execute a process, the process including: a first presenting step of presenting to a user an expression group related to taste or aroma of a first food/beverage; a second presenting step of presenting to the user a second food/beverage as a candidate of a food/beverage that the user eats and drinks together with the first food/beverage presented in the first presenting step; a third presenting step of presenting to the user, from the expression group shown at the first presenting step, one or more expressions related to the taste or flavor of the second food/beverage presented at the second presenting step, the one or more expressions having an appearance that is distinguishable from other expressions.

### ADVANTAGOUS EFFECTS

An aim of the present invention is to provide an expression group related to the taste or flavor of a certain food/beverage, and to inform a user of an expression related to the taste or flavor of another food/beverage that is compatible with the food/beverage from the expression group.

### BRIEF DESCRIPTION OF THE DRAWINGS

FIG. 1 shows an exemplary functional configuration of information processing system 1 according to an embodiment;
FIG. 2 shows an exemplary hardware configuration of information processing system 1;
FIG. 3 is a flowchart showing an operation of information processing system 1;
FIG. 4 shows an example of database 111;
FIG. 5 shows exemplary contents of the expression data in database 111;
FIG. 6 shows an example of database 112;
FIG. 7 shows an exemplary screen displayed on client terminal 20;
FIG. 8 shows an exemplary screen displayed on client terminal 20; and
FIG. 9 shows an exemplary screen displayed on client terminal 20.

### DESCRIPTION OF REFERENCE NUMERALS

1 ... information processing system, 10 ... server device, 12 ... storage unit, 13 ... first presenting unit, 14 ... second presenting unit, 15 ... third presenting unit, 16 ... display unit, 17 ... specifying unit, 18 ... receiving unit, 20 ... client terminal, 91 ... area, 93 ... area, 101 ... CPU, 102 ... memory, 103 ... storage, 104 ... communication IF, 111 ... database, 201 ... CPU, 202 ... memory, 203. Storage, 204 ... Communication IF, 205 ... Input device, 206 ... Output device

### DETAILED DESCRIPTION

### 1. Configuration

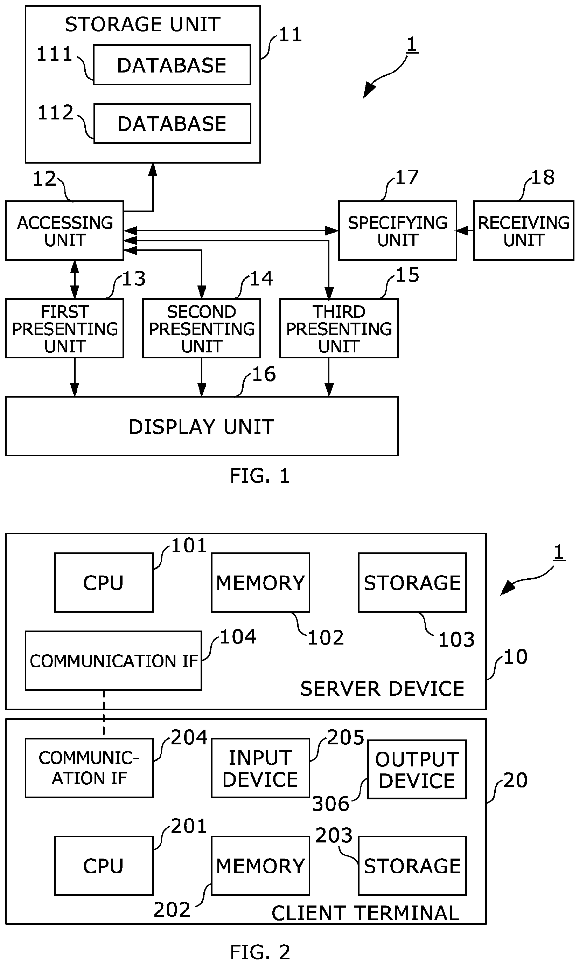

FIG. 1 shows an exemplary functional configuration of information processing system 1 according to an embodiment of the present invention. Information processing system 1 is a system that, for presenting a second food/beverage that is compatible with a first food/beverage (for example, a certain sake (that is, Japanese Rice Wine)), presents all expressions that make it easy for the user to recall the taste or flavor of the first food/beverage, and informs the user of an aspect of the taste or flavor of the second food/beverage that is strongly related to an aspect of the taste or flavor of the first food/beverage, that is, which of the related expressions of the taste or flavor having compatibilities with the first food/beverage and the second food/beverage.

Information processing system 1 includes storage unit 11, accessing unit 12, first presenting unit 13, second presenting unit 14, third presenting unit 15, display unit 16, receiving unit 18, and specifying unit 17. Storage unit 11 stores various data and programs. In this example, storage unit 11 stores databases 111 and 112. Database 111 is a database that records, for each of the plurality of first foods/beverages, attributes of the first foods/beverages and expressions for communicating the taste or flavor of the first foods/beverages to the user. Database 112 is a database that records, for each of the plurality of second foods/beverages, an attribute of the second foods/beverages, information identifying the first foods/beverages that are compatible with the second foods/beverages, and an expression regarding a taste or a flavor that works with both the first foods/beverages and the second foods/beverages. Accessing unit 12 accesses databases 111 and 112.

First presenting unit 13 presents to the user an expression group related to the taste or aroma of the first food/beverage. The expression group presented by first presenting unit 13 only needs to be capable of transmitting the taste or flavor of the first food/beverage to the user, and may include an expression other than a character string, indicated by an image, such as a photograph, an illustration, or a color, in addition to the expression indicated by a character string. Second presenting unit 14 presents to the user the second food/beverage as a candidate of the food/beverage that is recommended to the user to eat together with the first food/beverage presented by first presenting unit 13. The first food/beverage is, for example, a drink containing alcohol; more specifically, sake. The second food/beverage is, for example, food, and in this case, various dishes. Third presenting unit 15 presents, to the user, one or more expressions related to the taste or aroma of the second food/beverage presented by second presenting unit 14 from the expression group presented by first presenting unit 13, the expression(s) having an appearance that is distinguishable from other expressions. Display unit 16 displays a variety of information. That is, first presenting unit 13, second presenting unit 14, and third presenting unit 15 presents information to the user by displaying the information on display unit 16. Receiving unit 18 receives an operation input by the user.

Specifying unit 17 specifies a time when the second food/beverage presented by second presenting unit 14 is ordered by the user or a time when the second food/beverage is provided to the user. After the time specified by specifying unit 17, third presenting unit 15 presents to the user one or more expressions related to the taste or aroma of the second food/beverage, the expression(s) having an appearance that is distinguishable from other expressions.

FIG. 2 shows an exemplary hardware configuration of information processing system 1. In this example, information processing system 1 includes server device 10 and client terminal 20. Server device 10 is an information processing device or a computer device having CPU 101, memory 102, storage 103, and communication IF 104. CPU 101 is a processor that performs various operations in accordance with a program. Memory 102 is a main storage device that functions as a work area when CPU 101 executes a program, and includes, for example, a RAM (Random Access Memory). Storage 103 is an auxiliary storage device that stores various types of data/programs, and includes at least one of an SSD (Solid State Drive) and an HDD (Hard Disk Drive). Communication IF 104 is a device that communicates with other devices according to a predetermined standard (e.g., Ethernet), and includes, for example, an NIC (Network Interface Card).

In this example, the program stored in storage 103 includes a program (hereinafter referred to as a "server program") for causing a computer device to function as a server of information processing system 1. When CPU 101 executes the server program, the functions shown in FIG. 1 are implemented in the computer device. When CPU 101 is executing the server program: at least one of memory 102 and storage 103 is an example of storage unit 11; CPU 101 is an example of specifying unit 17; and CPU 101 and communication IF 104 are examples of accessing unit 12, first presenting unit 13, second presenting unit 14, third presenting unit 15, and receiving unit 18.

Client terminal 20 is an information processing device or a computer device including CPU 201, memory 202, storage 203, communication IF 204, input device 205, and output device 206; more specifically, for example, a smart phone, a tablet device, or a personal computer. CPU 201 is a processing unit that performs various operations in accordance with a program. Memory 202 is a main storage device that functions as a work area when CPU 201 executes the program, and includes, for example, a RAM. Storage 203 is an auxiliary storage device for storing various data and programs, including, for example, an SSD. Communication IF 204 is a device that communicates with other devices according to a predetermined standard (for example, LTE (Long Term Evolution) or WiFi (registered trademark)), and includes, for example, an LTE antenna and a chipset. Input device 205 is a device for inputting data or an instruction to client terminal 20, and includes, for example, at least one of a touch screen, a keyboard, and a microphone. Output device 206 is a device for outputting information, and includes, for example, a display and a speaker.

In this example, the program stored in the storage 203 includes a program (hereinafter referred to as a "client program") for causing the computer device to function as a client terminal of information processing system 1. The client program is a general-purpose web browser or a dedicated application program. When CPU 201 executes the client program, the functions shown in FIG. 1 are implemented in the computer device. When CPU 201 is executing the client program, the output device 206 is an exemplary display unit 16.

Information processing system 1 is typically used in a restaurant that provides to a user a plurality of foods/beverages including a first food/beverage and a second food/beverage. Therefore, information processing system 1 includes an order management system that receives an order from a user at a restaurant and outputs the order content to an employee of the restaurant, or is communicably connected to the order management system, although this not shown in the figures.

### 2. Operation

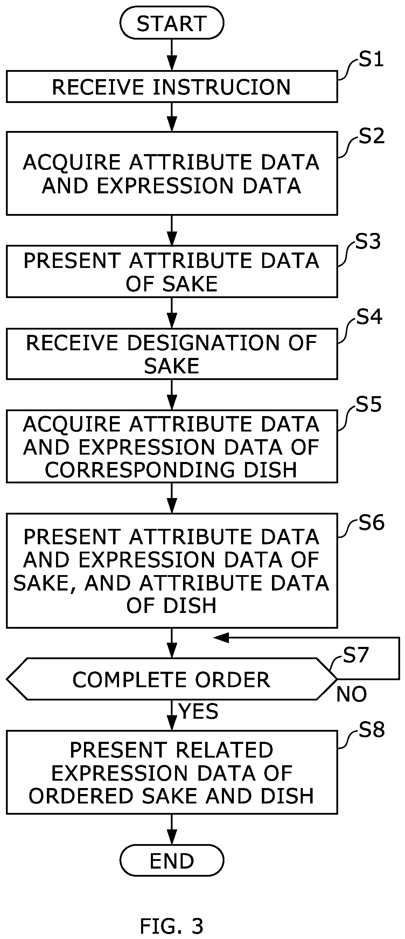

FIG. 3 is a flowchart illustrating an operation of information processing system 1. Here, the description includes an example where a user selects sake as the first food/beverage while referring to information on some sake and food using the function of information processing system 1 in a restaurant, a bar, or the like, and selects food as the second food/beverage to be eaten and drunk together with the sake, and orders the food/beverage in the restaurant. In the following description, functional elements such as storage unit 11 may be described as a subject of processing. This means that hardware elements such as a CPU 101 executing software such as a server program cooperate with other hardware elements to execute the processing.

First, the user performs an operation, for example, tapping a touch screen of client terminal 20, to start an order. In step S1, this request is received by receiving unit 18.

In response to the request, in step S2, accessing unit 12 accesses database 111 and acquires the attribute data and the expression data of a plurality of types of sake. As described above, storage unit 11 stores database 111. In database 111, information on a plurality of sake is recorded prior to the flow of FIG. 3.

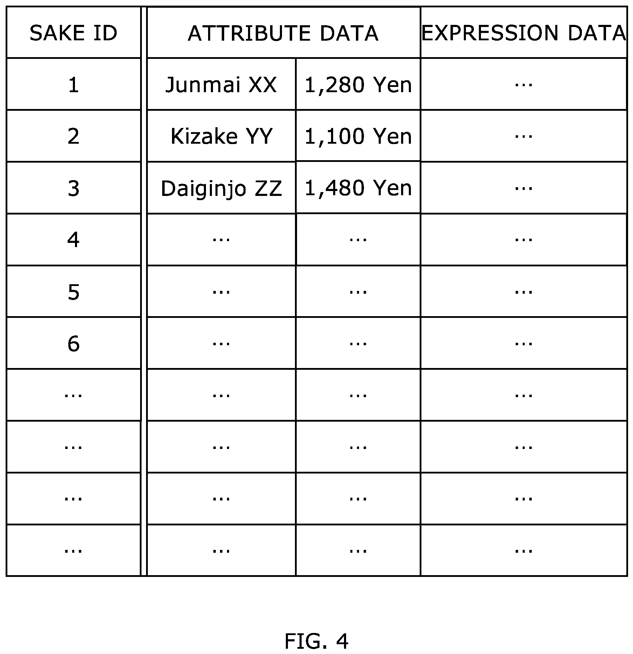

FIG. 4 shows an example of database 111. Database 111 includes a plurality of records. Each record corresponds to one type of sake, and includes ID of sake assigned to identify the sake, attribute data including the name and price of the sake, the place of production, raw materials, explanatory text, and the like, and expression data that is a group of expressions related to the taste or aroma of the sake.

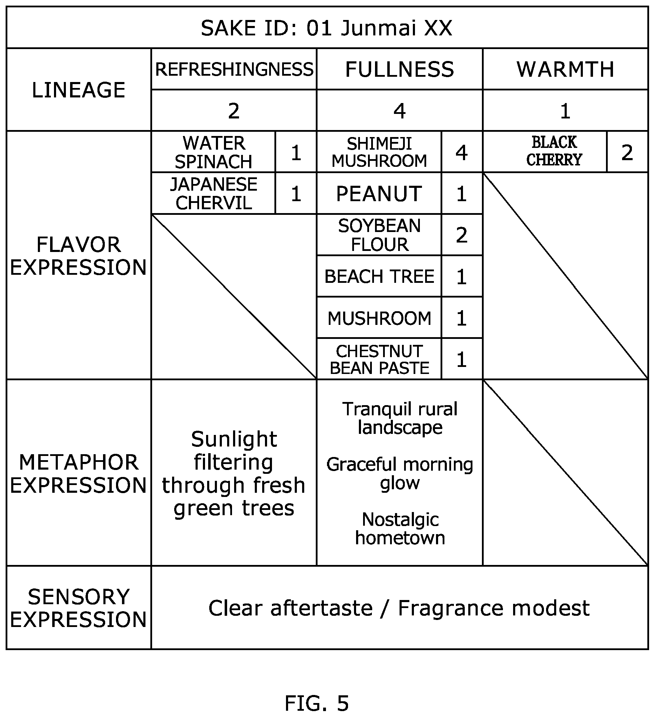

Details of the expression data will be described with reference to FIG. 5. FIG. 5 shows an exemplary expression relating to the taste or aroma of sake "Junmai XX" to which the sake ID "1" illustrated in FIG. 4 is assigned. Expression data is classified into four data groups: lineage, flavor expression, metaphor expression, and sensory expression.

The lineage is the highest classification in this example, and includes three elements: "refreshingness," "fullness," and "warmth." The expression data includes a numerical value indicating the ratio between these three elements. To avoid a case where the ratio of all the elements is equal, the sum of the numerical values indicating the balance of these three elements is set to be a value (for example, 7) that is not divisible by 3. In addition, to make it easier to identify the dominant element among the three elements, only one element has the maximum value among all elements (for example, the ratio of refreshingness:fullness:warmth=3:3:1 is not employed because it is not clear whether refreshingness or fullness is dominant). The sum of the value is common for all sake (i.e. the total value of these three elements for all sake is 7). For example, for the sake called "Junmai XX," the ratio is as follows: refreshingness:fullness:warmth=2:4: 1.

The flavor expression is the taste or flavor contained in the sake (here, the taste or flavor is referred to as flavor) expression by the names of other foodstuffs or plants such as pineapples, lemons, and apples. The expression data includes the intensity of each flavor. Specifically, the value is zero for a flavor that cannot be perceived from the sake, and the value indicating the strength of the flavor is included for a flavor that is perceived from the sake. This value is relative, and "1" indicates the perceived weakest flavor, and the more perceptible the flavor is, the higher the value becomes. Several flavors may be perceived from one type of sake. Each of the plurality of flavors belongs to (i.e., is associated with) a single lineage. For example, the flavor "water spinach" belongs to the lineage "refreshingness" and the flavor "shimeji mushroom" belongs to the lineage "fullness." In the example shown in the figure, the sake "Junmai XX" has a flavor level of "1" in all of water spinach, Japanese chervil, peanuts, beech trees, mushrooms, and chestnut bean paste, a flavor level of "2" in soybean flour and black cherry, and a flavor level of "4" in shimeji mushroom. Unlike the lineages, there is no limit on the sum of the values of flavor expressions.

The metaphor expression expresses the flavor or aroma of the sake by a noun with a modifier, such as "sunset over the gulf coastline," "tropical beach," or '"memories of first love." The expression data includes at least one metaphor expression for each type of sake. Each metaphor belongs to one of a plurality of adj ectival elements. In the example of the figure, the sake called "Junmai XX" includes the phrase "sunlight filtering through fresh green trees" as a metaphor expression of the "refreshingness" lineage, and the following three phrases: "tranquil rural landscape," "graceful morning glow," and "nostalgic hometown sky" as "fullness" line (the metaphor expression of the "warmth" lineage is not included). In this example, no intensity is recorded for the metaphor expressions.

Sensory expressions are expressions expressing the flavor or aroma of sake in adjectival expressions such as "Midnight" or "Fog." The expression data includes at least one sensory expression for each type of sake. In the example shown in the figure, the phrases "Clear aftertaste" and "Fragrance modest" are recorded in the sake called "Junmai XX." In this example, the sensory expressions are not associated with the lineage elements, and the intensities are not recorded.

In this example, the numerical values and phrases included in the expression data are a language or a numerical value of the flavor or aroma actually felt by one or a small number of specialists (for example, sake sommeliers) drinking the sake. Note that the structure and contents of the expression data are not limited to those illustrated in FIG. 5, and in short, any data indicating an expression group that causes a user to recall the taste or aroma of sake may be used. Thus, the expression data may include, in addition to the expression data indicated by characters, expression data indicated by images other than characters, such as photographs, illustrations, or colors.

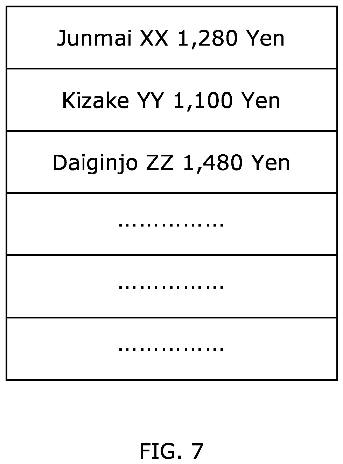

Referring to FIG. 3 again, in step S3, first presenting unit 13 presents to a user at client terminal 20 the acquired attribute data regarding the plurality of sake. As a result, as illustrated in FIG. 7, attributes (for example, name, price, etc.) related to a plurality of types of sake are displayed in the display area of display unit 16. The user refers to the attributes of the sake and performs an operation of designating a desired sake. In step S4, receiving unit 18 receives this designating operation.

In response to this, in step S5, accessing unit 12 accesses database 112 and acquires the attribute data and the related expression data of the dish corresponding to the sake ID of the designated sake. As described above, storage unit 11 stores database 112. In database 112, information about a plurality of dishes is recorded prior to the flow of FIG. 3.

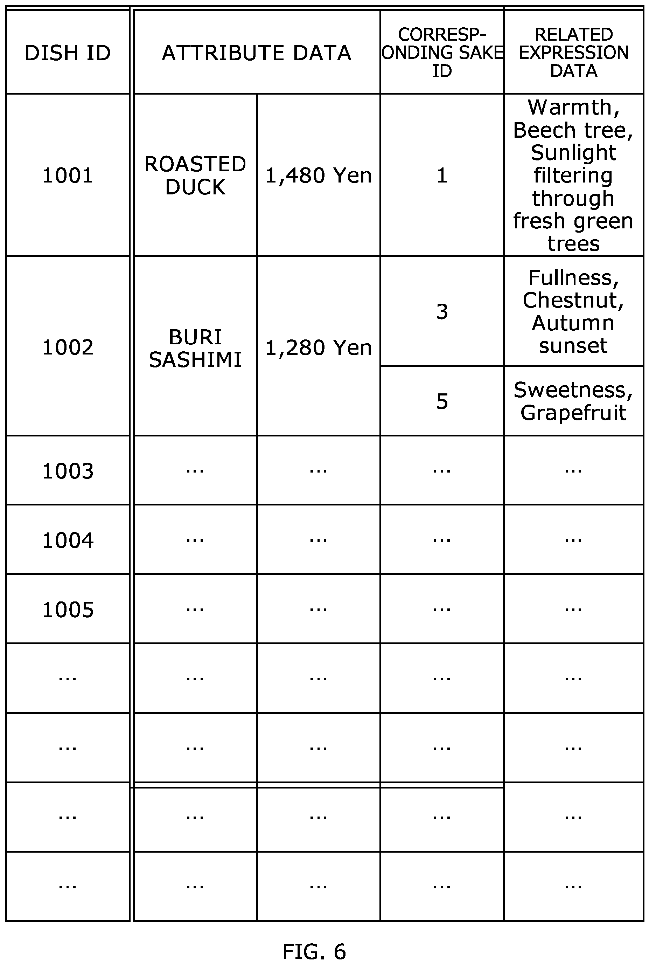

FIG. 6 shows an example of database 112. Database 112 includes a plurality of records. Each record corresponds to a single dish, and includes a dish ID assigned to identify the dish, attribute data including the name and price of the dish, the place of production, raw materials, explanatory text, and the like, a sake ID of the sake that is compatible with the dish (called related sake ID), and expression data related to taste or aroma (called related expression data) that is compatible with the dish and the sake. In the case shown in FIG. 6, for example, the dish having the dish ID "1001" is "roasted duck," the price thereof is "1,480 Yen," and the sake ID of the sake that is compatible with this dish is "1." Furthermore, the dish having this dish ID "1001" and the sake having the sake ID "1" have good compatibility in the expressions "warmth," "beech tree" and "Sunlight filtering through fresh green trees" among the expressions related to the taste or aroma of the sake having the sake ID "1" illustrated in FIG. 5. That is to say, the dish having the dish ID "1001" and the sake having the sake ID "1" are compatible in an aspect of the taste or aroma recalled by the expressions of "warmth," "beech trees," and "Sunlight filtering through fresh green trees." In this example, the combination of matched sake and dish is determined by a specific one or a small number of specialists (e.g., sake sommelier) who actually have eaten the dish and drunk the sake together. Also, what expression indicates compatibility is determined by the one or a small number of such specialists (for example, sake sommeliers), and data based on the determination results is recorded in database 112. Such a determination may be made with reference to the magnitude of the numerical value corresponding to each expression related to the taste or aroma of the sake illustrated in FIG. 5.

In step S5, when the sake ID received from client terminal 20 is, for example, "1," accessing unit 12 accesses database 112 to acquire the attribute data and the related expression data of the dish ("roasted duck" in the dish ID "1001" in the example of FIG. 6) in which the sake ID "1" is recorded as the corresponding sake ID.

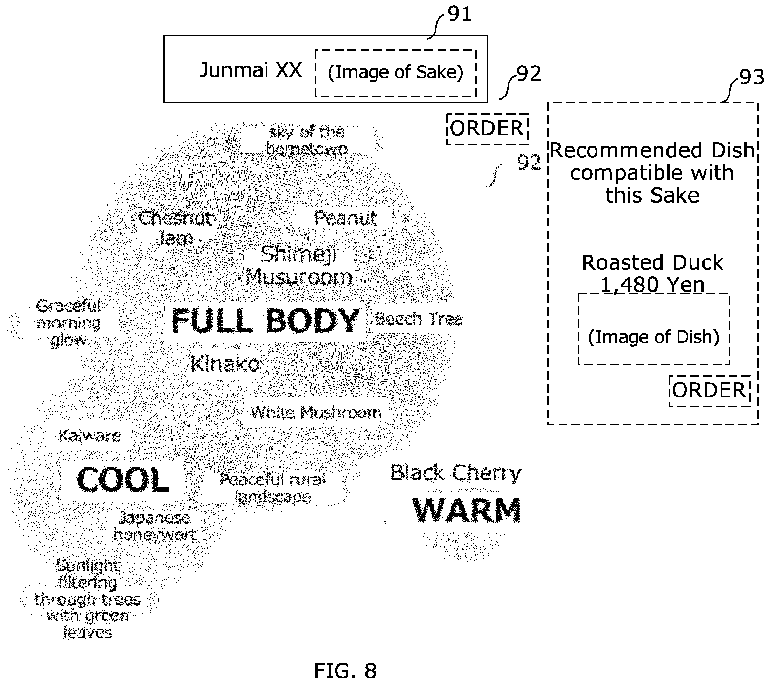

Next, in step S6, first presenting unit 13 presents to the user, at client terminal 20, the expression data related to the taste or aroma of the sake ID "1" designated by the user, and second presenting unit 14 presents, at client terminal 20, the attribute data of "roasted duck" of the dish ID "1001" to the user as the candidates for the food/beverage that the user eats and drinks together with the sake presented by first presenting unit 13. Thus, as illustrated in FIG. 8, in the display area of client terminal 20, the attribute of the sake "Junmai XX" is displayed in the area 91, the expression group relating to the taste or aroma of the sake is displayed in the area 92, and the attribute of "roasted duck" which is a dish that is compatible with the sake is displayed in the area 93.

The user refers to these pieces of information and performs an operation of specifying and ordering a desired dish and sake. Receiving unit 18 receives this order.

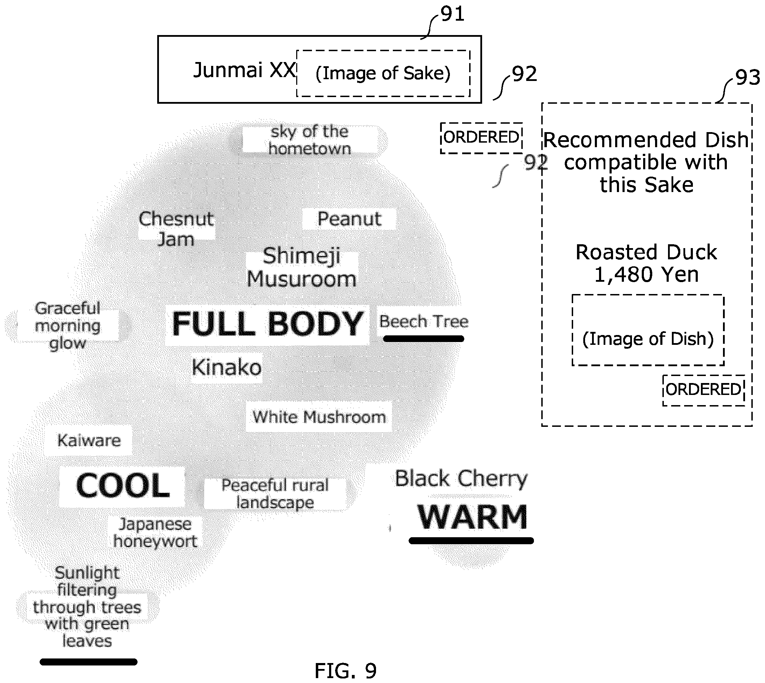

As a result, specifying unit 17 determines that the ordering by the user has been completed, and specifies the completion time (FIG. 3, step S7; YES). Next, in step S8, third presenting unit 15 presents to the user one or more expressions of the expression group presented by first presenting unit 13, which expression(s) indicates compatibility with the dish presented by second presenting unit 14, the expression(s) having an appearance that is distinguishable from the other expressions. Specifically, as illustrated in FIG. 9, in the expression group related to the taste or flavor of "Junmai XX," underlines are applied only to the expressions that indicate compatibility with the roasted duck (that is, the expressions indicated by the related expression data), namely, "warmth," "beech tree," and "sunlight filtering through fresh green trees." The presentation by third presenting unit 15 is not limited to presentation shown by underlining, and may use any method of highlighting, such as displaying in a color different from other expressions, blinking, or graying out other expressions.

Here, comparing the case where the presentation processing by third presenting unit 15 is performed after the ordering of sake and a dish, and the case where the presentation processing by third presenting unit 15 is performed before the ordering of sake and a dish, in the latter case, the user has not eaten the dish or drunk the sake, even if the expression that indicates compatibility is presented to the user, there is a problem that the user cannot actually perceive the good match indicated by the expression. On the other hand, in the former case, since the user is presented with the expressions that indicate compatibility of sake and food that the user can actually eat and drink, there is an advantage that the user can concretely realize that these are compatible from the presented expressions. Here, although the presentation processing by third presenting unit 15 is performed after ordering of sake and a dish, the presentation processing by third presenting unit 15 may be performed after sake and a dish are actually provided to the user. In some cases, an order management system of the restaurant can be identified by a manual operation performed by an employee of the restaurant; for example, when the sake and the dish are actually provided to the user. That is, specifying unit 17 may specify the time when the dish presented by second presenting unit 14 is provided to the user, and third presenting unit 15 may present one or more expressions related to the taste or flavor of the dish to the user after the time specified by specifying unit 17, the expression(s) having an appearance that is distinguishable from other expressions.

According to the present embodiment, since the expression group related to the taste or aroma of a certain food/beverage (sake) is presented, the user can know well what taste or aroma the food/beverage (the sake) has. Further, among the expression group related to the taste or flavor of a certain food/beverage (the sake), the user is presented with an expression(s) related to the taste or flavor of a food/beverage (a dish) that is compatible with a food/beverage (the sake) and the user can discern specifically what taste or flavor of the food/beverage (the sake) the presented food/beverage (the dish) is particularly compatible with. In addition, in a state where the user can eat food and drink sake, the user is presented with expressions that indicate compatibility, so that the user can actually eat food and drink sake, and can actually perceive the compatibility indicated by the presented expressions.

### 3. Modification

The present invention is not limited to the embodiments described above, and various modifications are possible. Some variations will be described below. Two or more of the items in the following modifications may be used in combination.

### 3-1. First Modification

Among the expression groups related to the taste or flavor of the first food/beverage presented to the user, a second food/beverage related in accordance with an expression selected by the user may be recommended. For example, in FIG. 8, when the user designates any expression of interest among the expression group related to the taste or flavor of "Junmai XX," client terminal 20 transmits the expression data to server device 10. Accessing unit 12 accesses database 112 and acquires the attribution data of the dish ID corresponding to the record including the expression data received from client terminal 20 as related expression data. Then, information processing system 1 presents to the user the attribute data of the dish. As described above, the information processing device according to the present invention may include a fourth presenting unit that presents to the user a third food/beverage having the taste or aroma related to the designated expression when any expression among the expression groups presented by first presenting unit 13 is designated by the user.

### 3-2. Second Modification

Among the expression groups related to the taste or flavor of the first food/beverage presented to the user, a second food/beverage associated with an expression matching the user's preference may be recommended. For example, in FIG. 8, the expression data that matches the user's preference among the expression groups related to the taste or aroma of "Junmai XX" is transmitted to server device 10. Accessing unit 12 accesses database 112 and acquires the attribution data of the dish ID corresponding to the record including the expression data received from client terminal 20 as the related expression data. Then, information processing system 1 presents the attribute data of the dish to the user. Here, AI (Artificial Intelligence) or machine-learning techniques may be used to identify expressions that also match the user's preferences. The model generated by this technique is a machine learning model having at least an input layer and an output layer, and is a model in which identification information of sake and information indicating an expression related to a taste or a fragrance actually perceived by a user who drinks the sake are provided to the input layer, and an expression indicating a tendency of a preference of the user, determined by an expert based on the expression indicating the taste or the fragrance, are provided to the output layer, and these are provided as training data for the machine learning. Further, the training may be performed by including the attribute information of the user in the training data provided to the input layer. As described above, the information processing device according to the present invention may include a fifth presenting unit that presents to the user a fourth food/beverage having the taste or the flavor related to the expression according to the preference of the user among the expression groups presented by first presenting unit 13.

### 3-3. Third Modification

In some cases, a plurality of second foods/beverages may be presented as those that are compatible with a single first food/beverage. In such cases, one or more expressions that are commonly related to the taste or aroma of the plurality of second foods/beverages among the expressions related to the taste or aroma of the first foods/beverages may be displayed with an appearance that is distinguishable from other expressions. For example, in FIG. 8, in the expression group related to the taste or flavor of "Junmai XX," when the expression that indicates compatibility with a certain first dish is "warmth" and "soybean flour" and the expression that indicates compatibilty with other second dishes is "warmth" and "peanuts," some highlighting is applied to "warmth," which is a common expression that indicates compatibility with these first dishes and second dishes. As described above, in the information processing device according to the present invention, when second presenting unit 14 presents a plurality of second foods/beverages as candidates for foods/beverages to be eaten together with the first foods/beverages presented by first presenting unit 13, third presenting unit 15 may present one or more expressions commonly related to the tastes or aromas of the plurality of second foods/beverages presented by second presenting unit 14 among the expression groups presented by first presenting unit 13, which expression(s) has an appearance that is distinguishable from other expressions.

### 3-4. Fourth Modification

In some cases, a plurality of second foods/beverages may be presented as those that are compatible with a single first food/beverage. In such cases, one or more expressions related to each of the tastes or flavors of the plurality of second foods/beverages among the expressions related to the taste or flavor of the first foods/beverages may be presented with an appearance that is distinguishable for each of the second foods/beverages. For example, in Fig. 8, an example is assumed where an expression that indicates compatibility with a certain first dish among the expression groups related to the taste or flavor of "Junmai XX" is "warmth" and "soybean flour," and an expression that indicates compatibility with other second dishes is "warmth" and "peanuts." The expressions "warmth" and "soybean flour" are displayed in red to show that these expressions indicate compatibility with the first dish while "warmth" and "peanuts" are displayed in blue to show these expressions indicate compatibility with the second dish. As described above, in the information processing device according to the present invention, when second presenting unit 14 presents a plurality of second foods/beverages as candidates for foods/beverages to be eaten together with the first foods/beverages presented by first presenting unit 13, third presenting unit 15 may present one or more expressions related to each of the tastes or aromas of the plurality of second foods/beverages presented by second presenting unit 14 among the expression groups presented by first presenting unit 13 so as to make a distinction for each of the second foods/beverages.

### 3-5. Other Modifications

The first food/beverage targeted by information processing system 1 is not limited to sake. It may be an alcoholic drink other than sake, such as wine or beer. The first food/beverage may also be a non-alcoholic beverage such as coffee, black tea, or green tea, a seasoning such as olive oil or vinegar, or a food such as buckwheat or pasta. Similarly, the second food/beverage is not limited to food, but may be a beverage.

The display screen shown in the embodiment is merely an example. Part of a UI illustrated in the embodiments may be omitted, or a UI element not illustrated in the figures may be added.

The functional configuration of information processing system 1 is not limited to that illustrated in the embodiment. Part of the functions of information processing system 1 may be omitted, or functions not described in the embodiment may be added.

The hardware configuration and the correspondence relationship between the hardware configuration and the functional configuration of information processing system 1 are not limited to those illustrated in the embodiment. For example, a plurality of computer devices may physically cooperate with each other to function as server device 10. Server device 10 may be a physical server or a virtual server. In the embodiment, at least a part of the functions described as being included in server device 10 may be implemented in client terminal 20. In this case, client terminal 20 may function as an "information processing device" of the present invention.

The flowchart illustrated in the embodiment is merely an example. The order of some of the processes may be changed, or some of the processes may be omitted. For example, the step of receiving the input of the attribute information of the user may be omitted.

A program executed by a processor such as a CPU 101 may be provided in a state of being recorded in a computer-readable recording medium such as a CD-ROM (Compact Disc Read Only Memory), or may be provided in a state of being downloadable via a network such as the Internet.

## Claims

1. An information processing device comprising:
a first presenting unit that presents to a user an expression group related to taste or aroma of a first food/beverage;
a second presenting unit that presents to the user a second food/beverage as a candidate of a food/beverage that the user eats and drinks together with the first food/beverage presented by the first presenting unit;
a third presenting unit that presents to the user, from an expression group shown by the first presenting unit, one or more expressions related to the taste or flavor of the second food/beverage presented by the second presenting unit, the one or more expressions having an appearance that is distinguishable from other expressions.

2. The information processing device according to claim 1, further comprising
a fourth presenting unit that presents to the user, in a case that one expression is designated from the expression group presented by the first presenting unit, a third food/beverage having taste or flavor related to the designated expression.

3. The information processing device according to claim 1 or 2, further comprising
a fifth presenting unit that presents to the user a fourth food/beverage having taste or flavor related to an expression according to the user's preference from the expression group presented by the first presenting unit.

4. The information processing device according to any one of claims 1 to 3, further comprising
a specifying unit that specifies the time when the second food/beverage presented by the second presenting unit were ordered by the user, or were provided to the user, wherein
after the time specified by the specifying unit, the third presenting unit presents to the user one or more expressions related to the taste or flavor of the second food/beverage, the one or more expressions having an appearance that is distinguishable from other expressions.

5. The information processing device according to any one of claims 1 to 4, wherein
in a case that the second presenting unit presents a plurality of the second food/beverage as a candidate of the food/beverage to be eaten and drunk together with the first food/beverage presented by the first presenting unit, the third presenting unit presents, from the expression group presented by the first presenting unit, one or more expressions related to specific taste or the aroma that is common to the plurality of second food/beverage presented by the second presenting unit, the one or more expressions having an appearance that is distinguishable from other expressions.

6. The information processing device according to any one of claims 1 to 5, wherein
in a case that the second presenting unit presents a plurality of the second food/beverage as a candidate of the food/beverage to be eaten and drunk together with the first food/beverage presented by the first presenting unit, the third presenting unit presents, from the expression group presented by the first presenting unit, one or more expressions related to each taste or aroma of each of the plurality of second food/beverage presented by the second presenting unit, the one or more expressions having an appearance that is distinguishable from other expressions.

7. The information processing device according to any one of claims 1 to 6, wherein
the expression group presented by the first presenting unit includes an image other than a character string.

8. The information processing device according to any one of claims 1 to 7, wherein
the first food/beverage is an alcoholic drink, and the second food/beverage is a dish.

9. An information processing method comprising,
a first presenting step of presenting to a user an expression group related to taste or aroma of a first food/beverage;
a second presenting step of presenting to the user a second food/beverage as a candidate of food/beverage that the user eats and drinks together with the first food/beverage presented in the first presenting step;
a third presenting step of presenting to the user, from the expression group shown at the first presenting step, one or more expressions related to the taste or flavor of the second food/beverage presented at the second presenting step, the one or more expressions having an appearance that is distinguishable from other expressions.

10. A program causing a computer to execute a process, the process comprising:
a first presenting step of presenting to a user an expression group related to taste or aroma of a first food/beverage;
a second presenting step of presenting to the user a second food/beverage as a candidate of a food/beverage that the user eats and drinks together with the first food/beverage presented in the first presenting step;
a third presenting step of presenting to the user, from the expression group shown at the first presenting step, one or more expressions related to the taste or flavor of the second food/beverage presented at the second presenting step, the one or more expressions having an appearance that is distinguishable from other expressions.
